# EUROPÄISCHE PATENTSCHRIFT

(11) **EP 2 158 800 B1**
(45) Veröffentlichungstag und Bekanntmachung des Hinweises auf die Patenterteilung: **15.08.2018**
(21) Anmeldenummer: 08015370.3
(22) Anmeldetag: 30.08.2008
(51) Int. Cl.: A01C 9/00, A01B 63/32

(54) **Legemaschine für Kartoffeln**
Planter for potatoes
Machine à planter des pommes de terre

(43) Veröffentlichungstag der Anmeldung: 03.03.2010
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse

(56) Entgegenhaltungen:
- BE-A- 493 480
- GB-A- 825 378
- GB-A- 2 048 034
- NL-C2- 1 014 692
- NL-C2- 1 020 747

## Beschreibung

Die Erfindung betrifft eine Legemaschine für Kartoffeln gemäß dem Oberbegriff des Anspruchs 1.

Bekannte Kartoffellegemaschinen dieser Art (DE 19 31 369 /1/) weisen einen Vorratsbehälter auf, aus dem als Saatgut vorgesehene Knollen in eine von einem Furchenzieher erzeugte Furche befördert werden. Sämtliche Bauteile dieser Legemaschine sind auf einem Maschinenrahmen abgestützt, wobei an dessen Unterseite der Furchenzieher und ein als Furchenzustreicher ausgebildetes Zudeckelement so gehalten sind, dass bei der Fahrbewegung der Legemaschine zu überwindende Unebenheiten des Ackerbodens zu unterschiedlichen Legetiefen führen können. Auch bei einer Legemaschine für Knollenfrüchte gemäß OE 339 649 /2/ sind ein als V-förmige Pflugschar ausgebildeter Furchenzieher und eine Streichbleche aufweisende Abdeckbaugruppe gemeinsam mit den Laufrädern am Maschinenrahmen gehalten, so dass Bodenunebenheiten ebenfalls die Legetiefe für die Knollen beeinflussen.

In DE 26 15 285 /3/ ist eine Kartoffellegemaschine gezeigt, bei der zusätzlich zu den Stützrädern für jede Knollenreihe ein vorderes Lenkerviereck mit einer Tastrolle vorgesehen ist, so dass eine höhenverstellbare Aufnahme für den Furchenzieher erreicht ist. Bei dieser Konstruktion werden die durch Unebenheiten des Ackerbodens bedingten Höhenbewegungen der Tastrolle auf den Furchenzieher übertragen, so dass sich dessen Spitze abstandsgleich zur Bodenoberfläche bewegt und eine Legefurche gleichbleibender Tiefe geformt wird. Der Legevorgang ist mittels dieser störanfälligen Tastrollen von Höhenschwenkungen und Nickbewegungen des Rahmens der Legemaschine weitgehend unbeeinflusst.

In DE 18 33 436 /4/ ist eine Kartoffellegemaschine gezeigt, die nachgeordnet einem die Furche formenden Scheibenpaar jeweilige seitliche Bodenabweisbleche aufweist, mit denen ein Einströmen von Bodenteilen in die Furche verhindert wird und gemäß DE 28 08 882 /5/ weist die Legemaschine einen Furchenzieher auf, der mittels seitlicher Ansätze zum Zuführbereich der Knollen hin verlängert ist. Mit diesen Ansätzen wird nach dem Einlegen der Knolle in die Furche nur deren sofortige Beschüttung erreicht, so dass eine zusätzliche Baugruppe zur nachfolgenden Dammformung erforderlich ist.

Bei einer Legemaschine gemäß DE 20 29 015 /6/ ist der am Maschinenrahmen befindliche Furchenzieher ortsfest und die nachgeordneten Bodenräder sind durch Schwenkachsen mit dem Maschinenrahmen verbunden. In DE 197 10 036 /7/ ist eine Legemaschine mit oberem Vorratsbunker gezeigt, wobei an einem diesen untergreifenden Tragrahmen unmittelbar hinter den Furchenziehern eine Dammfräse angeordnet ist und in Fahrtrichtung hinter dieser der Tragrahmen jeweilige Dammformbleche trägt. Mit dieser Konstruktion soll bei einem quer zur Fahrtrichtung auftretenden Gefälle die Knolle stets mittig in die Furche bzw. den Damm gelangen, wobei jedoch durch die den Boden über Kopf nach vorn werfende Dammfräse bzw. deren Zinken die Höhenlage der eingelegten Knolle ungewollt verändert werden kann. In G 94 01 110 /8/ ist eine Legemaschine für eine Beet-Legung mit mehreren Kartoffelreihen in einem Damm gezeigt, wobei lediglich die Furchenzieher gemeinsam mit dem Vorratsbehälter an einem Maschinenrahmen gehalten sind.

Bei aktuellen Ausführungen von mehrreihigen Kartoffellegemaschinen (Deutsche Landwirtschaftsgesellschaft, 1999, DLG-Prüfbericht 4824, Legemaschine GL34K; /9/) ist eine einfache Handhabung möglich, da die Legetiefe mittels stufenlos einstellbarer Tasträder vor dem jeweiligen Furchenzieher erfolgt. Diesem nachgeordnet sind als Einzelteile jeweilige Zudeckscheiben und Dammformer am Maschinenrahmen vorgesehen, so dass diese Teile separat auf die jeweiligen Legebedingungen einzustellen sind.

In NL-C2-1 020 747 ist eine Legemaschine gezeigt, bei der ein Furchenzieher mittels einer eine Zylindereinheit mit Mehr-Punkt-Halterung aufweisenden Stelleinheit einzeln verstellt werden kann. Dazu sind Stellzylinder vorgesehen, wobei die eine parallelogrammartige Mehrpunktaufhängung aufweisende Stelleinheit in einem ihrer Verbindungspunkte direkt auf den Furchenzieher wirkt. Die Zudeckelemente sind dabei unabhängig vom Furchenzieher über eine Teleskopstange in den Abstützbereich am Rahmen geführt. Diese Teleskopstangen sind mittels jeweiliger eine Federung aufweisenden Gelenkverbindungen so an einer Querstange gehalten, dass die Zudeckelemente selbständige (Schwing-)Bewegungen ausführen können und damit diese Zudeckelemente jeweils nur als unabhängig vom Furchenzieher verstellbare Teile wirksam sind.

In GB 825 378 A wird eine Kartoffellegemaschine gezeigt, bei der mittels eines Stützrades eine Drehbewegung auf die Vereinzelungsvorrichtung übertragen wird. Diese Vereinzelungsvorrichtung weist dabei einen Rahmen auf, an dem vorderseitig der Furchenzieher (einstellbar) gehalten ist, und an der Rückseite des Rahmens sind die Abdeckscheiben gehalten. Bei dieser Legemaschine sind die jeweiligen Schenkel in Form eines "Parallelogrammlenkers" in das System integriert. Damit kann die gesamte Einheit aus Vorratsbehälter, Vereinzelungsrad, Rahmen und daran befindlicher Abdeckbaugruppe nur gemeinsam als komplette Baugruppe relativ zum Zugbalken geschwenkt werden bzw. ist mittels eines Stellmechanismus eine Voreinstellung möglich.

In GB-A-2 048 034 wird eine Legeeinheit gezeigt, bei der eine Rahmenkonstruktion im Bereich jeweiliger Verbindungspunkte am Zugfahrzeug zu fixieren ist, derart, dass von diesem ausgehend eine L-förmige Tragstruktur nach hinten abragt. Bei diesem Traggestell ist unterhalb des L-förmigen Rahmens ein schwenkbar gehaltener Stützarm vorgesehen, an dem der Furchenzieher seinerseits "schwenkbeweglich" gehalten ist, so dass entsprechend einer oberen Anschlagplatte als Begrenzung eine Tiefeneinstellung möglich ist. Unabhängig von diesem Furchenzieher sind die jeweiligen Zudeckelemente über jeweilige Verbindungsteile mit einem zweiten Rahmenteil verbunden, wobei die Zudeckelemente ihrerseits höhenverstellbar ausgeführt sind. Mit dieser Konstruktion wird eine ohne Stützräder o. dgl. Bodenauflageteile wirksame Haltestruktur für eine Legemaschine gezeigt. Bei dieser wird zwar die Fixierung von Furchenzieher und Zudeckelementen als gemeinsam bewegliche Baugruppe vorgesehen, aber mit der L-förmigen Ausführung des Rahmens wird die unmittelbare Abhängigkeit dieses Systems vom Träger des Zugfahrzeugs bzw. den Verbindungspunkten (so genannte Aushebemaschine) deutlich.

Die Erfindung befasst sich mit dem Problem, eine Legemaschine für Kartoffeln zu schaffen, die mit verringertem technischen Aufwand sowie unverändert hoher Legeleistung eine gleichmäßigere Legefurche ermöglicht, wobei in deren Bereich auch bei unterschiedlichen Bodenbedingungen für eingelegte Knollen ein wachstumsoptimal einstellbarer Dammaufbau gewährleistet ist und in diesem die gelegten Knollen einen konstanten Abstand zur Dammoberseite aufweisen. Die Erfindung löst diese Aufgabe mit einer Kartoffellegemaschine mit den Merkmalen des Anspruchs 1. Hinsichtlich weiterer Ausgestaltungen wird auf die Ansprüche 2 bis 17 verwiesen. Die Legemaschine für Kartoffeln ist in erfindungsgemäßer Ausführung im Nahbereich unterhalb der Vereinzelungsvorrichtung mit einer Furchenform- und Abdeck-baugruppe versehen, bei der der Furchenzieher und das zumindest eine Zudeckelement eine funktionale Einheit bilden und eine synchrone Verstellung der beiden Teile ausgenutzt wird. Für diese gemeinsame Verstellung ist prinzipiell denkbar, gleichzeitig antreibbare Stellorgane, z. B. Hydraulikantriebe, -zylinder o. dgl., vorzusehen, womit jedoch ein hoher Steuerungsaufwand verbunden ist.

Vorteilhaft ist die mechanisch verbundene Teile aufweisende Abdeckbaugruppe als Baueinheit verstellbar und mittels eines Tragwerkes am Maschinenrahmen abgestützt, so dass bisher vorgesehene Tasträder o. dgl. Führungsteile zur Tiefen- bzw. Höhenanpassung entbehrlich sind und mittels der Abdeckbaugruppe eine vorgesehene Knollentiefe auch bei sich ändernden Bodenbedingungen konstant gewährleistet ist.

Das Konzept dieser Konstruktion mit der Abdeckbaugruppe geht davon aus, dass der für einen Legevorgang mit an sich bekannter Halterung voreinstellbare Furchenzieher und das zumindest eine Zudeckelement nunmehr auch während des Legevorgangs gemeinsam verstellbar und damit so einstellbar sind, dass die im Bereich dieser Baueinheit von oben in die erzeugte Furche eingelegten Knollen nach einer unmittelbar anschließbaren Dammformung eine zuverlässig konstante und für einen optimalen Pflanzenwuchs vorteilhafte Legetiefe im Damm aufweisen.

Im Bereich der aus Furchenzieher und Zudeckelement bestehenden Baueinheit sind zur Abstützung am Maschinenrahmen als eine mechanische Kopplung wirksame Bauteile vorgesehen, wobei diese einstellbar sind und nach Art einer Zwangsführung eine Optimierung der Bodenbewegung beim Legevorgang ermöglichen. Diese Bauteile bilden ein zum Maschinenrahmen hin vorgesehenes Tragwerk für die Baueinheit, so dass eine schnelle und an die jeweiligen Bodenverhältnisse anpassbare Verstellung von Arbeitspositionen möglich ist und unterschiedliche Zudeckelemente und/oder Dammformer mit dieser Baueinheit kombinierbar sind. Erfindungsgemäss ist die den Furchenzieher und das in Form eines Dammformbleches ausgebildete Zudeckelement aufweisende Baueinheit mit einem im wesentlichen parallel zur Fahrtrichtung verlaufenden Längsbalken versehen, so dass mittels des ausgehend vom Maschinenrahmen an diesem Längsbalken angreifenden Tragwerkes jeweilige Schwenkungen in bzw. entgegen der Fahrtrichtung der Maschine möglich sind und damit die beiden am Längsbalken befindlichen Bauteile synchron bewegt werden. Ebenso ist denkbar, sowohl den Furchenzieher als auch die Dammformbleche höhenverstellbar am Längsbalken abzustützen und durch jeweilige Stellelemente zusätzlich deren gemeinsame bzw. einzelne Höhenverstellung herbeizuführen.

Durch die mechanische Kopplung des Furchenziehers und des Dammformbleches im Bereich des Längsbalkens ist eine nach Art einer "Wippe" wirksame Abdeckeinheit geschaffen, die erstmals das Dammformblech als unmittelbare Tiefenführung für den vorgelagerten Furchenzieher nutzt. Die bisher vor dem Verlegevorgang erfolgenden Voreinstellungen mittels Tasträder o. dgl. Führungsteile sind entbehrlich und das System ermöglicht insgesamt mit geringerem Aufwand einen optimalen Legevorgang in unterschiedlichen Bodenklassen. Mit der kompakten Bauweise der Maschine ist deren stabiler Einsatz gewährleistet und für die gelegten Kartoffeln wird im Damm eine wachstumsoptimale Mittellage erreicht.

Weitere Einzelheiten und vorteilhafte Ausgestaltungen der Erfindung ergeben sich aus der nachfolgenden Beschreibung, in der mehrere Ausführungsbeispiele der erfindungsgemäßen Legemaschine veranschaulicht sind. In der Zeichnung zeigen:
- Fig. 1: eine schematische Seitenansicht einer Kartoffellegemaschine gemäß dem Stand der Technik,
- Fig. 2: eine Seitenansicht ähnlich Fig. 1 mit einer erfindungsgemäßen Legemaschine, die als eine Abdeckbaugruppe den Furchenzieher und ein Zudeckelement aufweist,
- Fig. 3: eine Rückansicht der Legemaschine gemäß Fig. 2,
- Fig. 4: eine perspektivische Rückansicht ähnlich Fig. 3 mit der Damm-Profilierung,
- Fig. 5: eine Seitenansicht ähnlich Fig. 2 mit einer ein Rollrad aufweisenden Konstruktion,
- Fig. 6: eine Rückansicht der Legemaschine gemäß Fig. 5,
- Fig. 7: eine perspektivische Rückansicht ähnlich Fig. 6 mit der Damm-Profilierung,
- Fig. 8: eine Seitenansicht ähnlich Fig. 2 mit einer zweiten Ausführung der Baueinheit im Bereich des Furchenziehers bzw. des Zudeckelementes,
- Fig. 9: eine Rückansicht der Legemaschine gemäß Fig. 8,
- Fig. 10: eine dritte Ausführung der Legemaschine ähnlich Fig. 8,
- Fig. 11: eine Rückansicht der Legemaschine gemäß Fig. 10,
- Fig. 12: eine Seitenansicht ähnlich Fig. 2 mit einer zweiten Ausführung einer Vereinzelungseinrichtung und einer an diese angepassten Halterung der Abdeckbaugruppe,
- Fig. 13: eine dritte Ausführung der Legemaschine ähnlich Fig. 10,
- Fig. 14: eine Rückansicht der Legemaschine gemäß Fig. 13, und
- Fig. 15: eine Seitenansicht ähnlich Fig. 13 mit veränderter Halterung der Baueinheit.

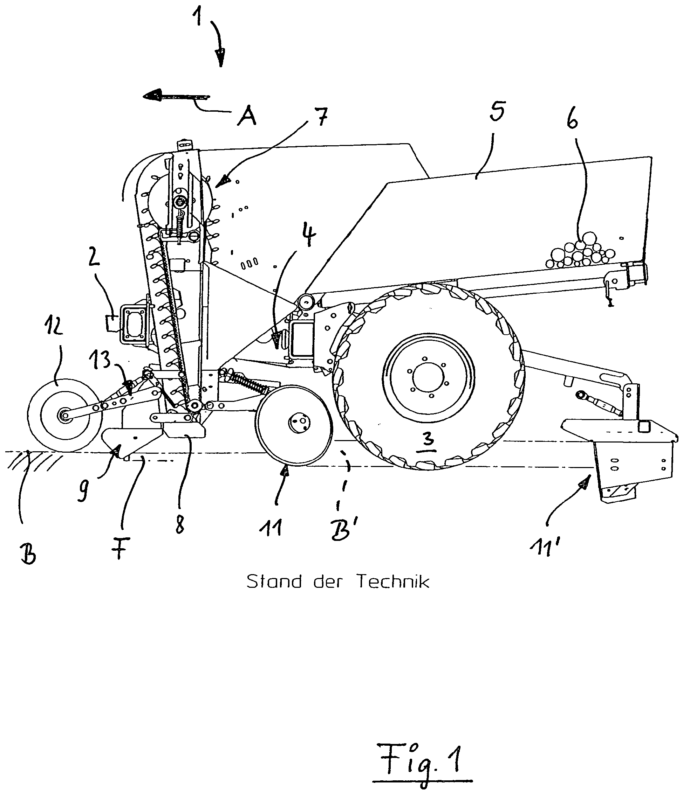

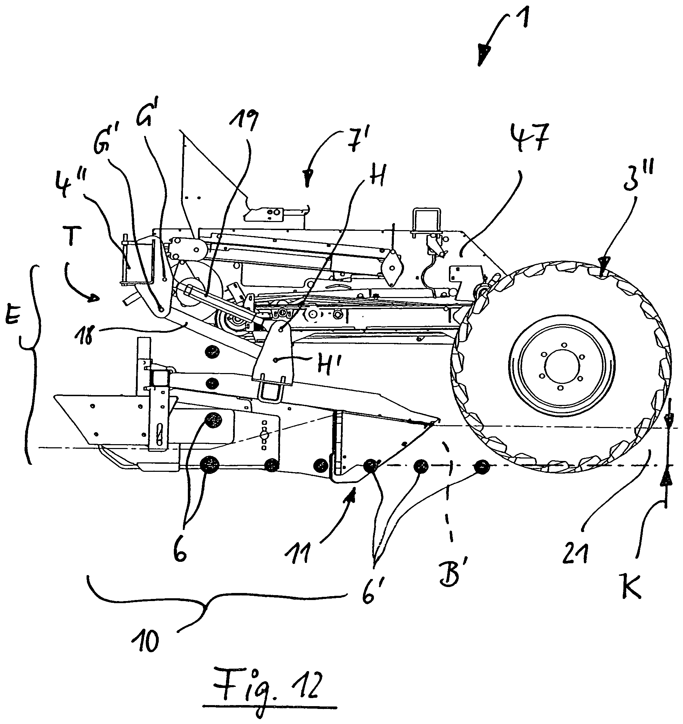

In Fig. 1 ist eine insgesamt mit 1 bezeichnete Legemaschine für Kartoffeln dargestellt, wobei diese Konstruktion eine dem gängigen Stand der Technik entsprechende Ausführung aufweist. Die Legemaschine 1 weist einen von einem nicht dargestellten Zugfahrzeug im Bereich einer Anhängevorrichtung 2 erfassbaren und über Laufräder 3 o. dgl. Abstützung im Bereich des Ackerbodens B verlagerbaren Maschinenrahmen 4 auf. An diesem Maschinenrahmen 4 ist für einen zumindest einreihigen Legevorgang eine einen oberen Vorratsbehälter 5 für Knollen 6 o. dgl. Pflanzgut aufweisende Vereinzelungsvorrichtung 7 gehalten. Im Bereich dieser Vereinzelungsvorrichtung 7 ist nahe einem unteren Auslass 8 ein in Arbeitsrichtung A wirksamer Furchenzieher 9 vorgesehen. In die mittels des Furchenziehers 9 erzeugte Furche F werden die aus der Vereinzelungsvorrichtung 7 ausgeförderten Knollen 6 (Fig. 12) eingelegt und danach wird mittels zumindest einem Zudeckelement 11 Ackerboden B' auf die verlegten Knollen 6' aufgehäufelt. Zur Steuerung dieses Vorganges ist an den bekannten Legemaschinen 1 ein Tastrad 12 vorgesehen. Dieses Tastrad 12 ist über Verbindungsteile 13 mit dem Maschinenrahmen 4 verbunden. Die ebenfalls an diesem gehaltenen Bauteile, nämlich der Furchenzieher 9 und das Zudeckelement 11, sind jeweils einzeln einstellbar und steuerbar. Zusätzlich kann an diese bekannten Legemaschinen 1 - Stand der Technik gemäß /9/ - endseitig auch ein Dammformer 11' als Zusatzbauteil angekoppelt werden.

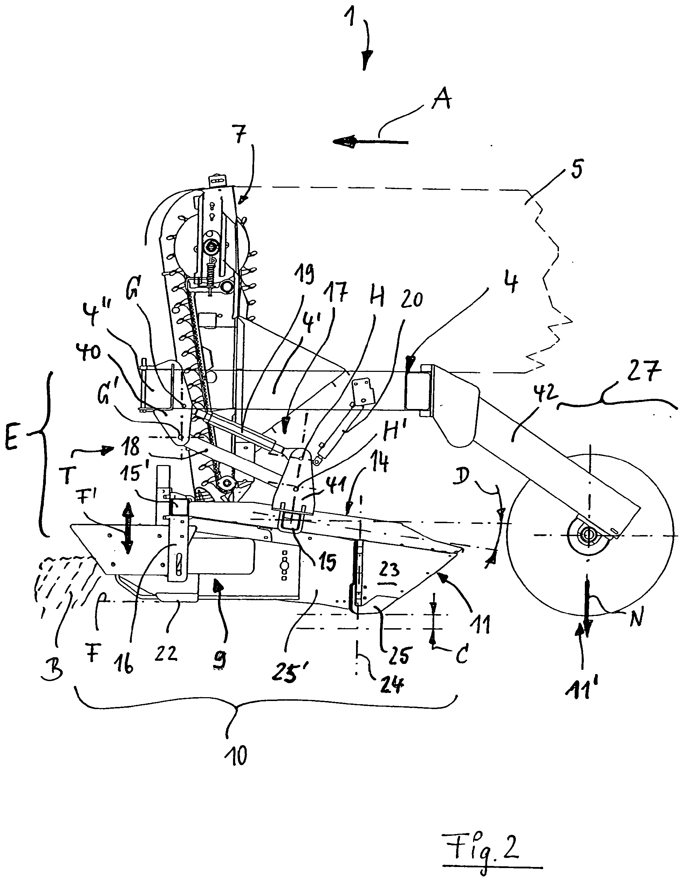

Das erfindungsgemäße Konzept der Legemaschine 1 (Fig. 2 bis 4) sieht vor, dass der für den Legevorgang voreinstellbare Furchenzieher 9 und das zumindest eine Zudeckelement 11 eine Abdeckbaugruppe 10 bilden und dabei gemeinsam verstellbar an dem Längsstreben 4' sowie Querstreben 4" aufweisenden Maschinenrahmen 4 gehalten sind (Fig. 2). Diese gemeinsame Verstellbarkeit kann auch durch synchron bewegliche Stellelemente (nicht dargestellt) bewirkt werden, vorteilhaft ist jedoch eine mechanische Verbindung nach Art einer Zwangsführung vorgesehen.

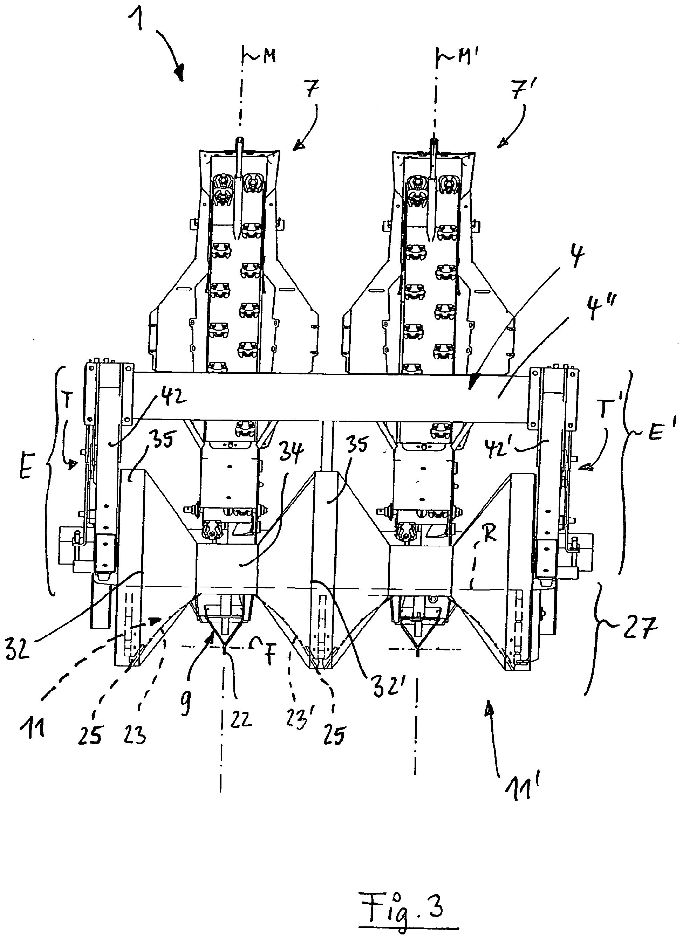

Bei diesem das Tastrad 12 entbehrlich machenden und konstruktiv vereinfachten System bilden der Furchenzieher 9 und das zumindest eine Zudeckelement 11 der Abdeckbaugruppe 10 eine durch ein Tragwerk T mit dem Maschinenrahmen 4 verbundene Baueinheit E. In der dargestellten Ausführung gemäß Fig. 2 sind der Furchenzieher 9 und das Zudeckelement 11 gemeinsam an einem in Richtung der Arbeitsbewegung A verlaufenden und im wesentlichen parallel zur Längsmittelebene M ausgerichteten Längsbalken 14 der Baueinheit E gehalten. Es versteht sich, dass bei einer in der Praxis üblicherweise mehrreihigen Ausführung der Legemaschine 1 (Fig. 3, zweireihig; denkbar: 4-, 6 oder 8-reihig) an jeweiligen durch einen Querträger 15, 15' verbundenen Tragwerken T, T' zumindest zwei außenseitige Baueinheiten E, E' im Bereich der parallele Mittellängsebenen M, M' definierenden Verlegeeinheiten 7, 7' vorgesehen sind.

Die jeweiligen randseitigen Tragwerke T, T' (Fig. 2) bilden eine Steuerung, mit der der in Arbeitsrichtung A verlaufende Furchenzieher 9 und das nachgeordnete Zudeckelement 11 als die Abdeckbaugruppe gemeinsam handhabbar sind. Dabei sind die Teile 9 und 11 nach Art einer Zwangsführung mechanisch gekoppelt. Durch eine Höhenverlagerung C bzw. eine Schwenkbewegung D kann eine jeweils optimale Tiefen-Anpassung der Furche F bzw. eine Volumen-Anpassung von auf die eingelegten Knollen 6' (Fig. 12) mittels des verschwenkten Zudeckelementes 11 aufgeworfenen Bodenteilen B' erreicht werden. In der dargestellten Ausführung kann der Furchenzieher 9 auch im Bereich von vorderseitig am Querträger 5 befindlichen Halteteilen 16 separat eingestellt werden (Pfeil F'). Ebenso ist denkbar, dass der Furchenzieher 9 und/oder das Zudeckelement 11 einzeln verstellbar am Tragwerk T gehalten sind.

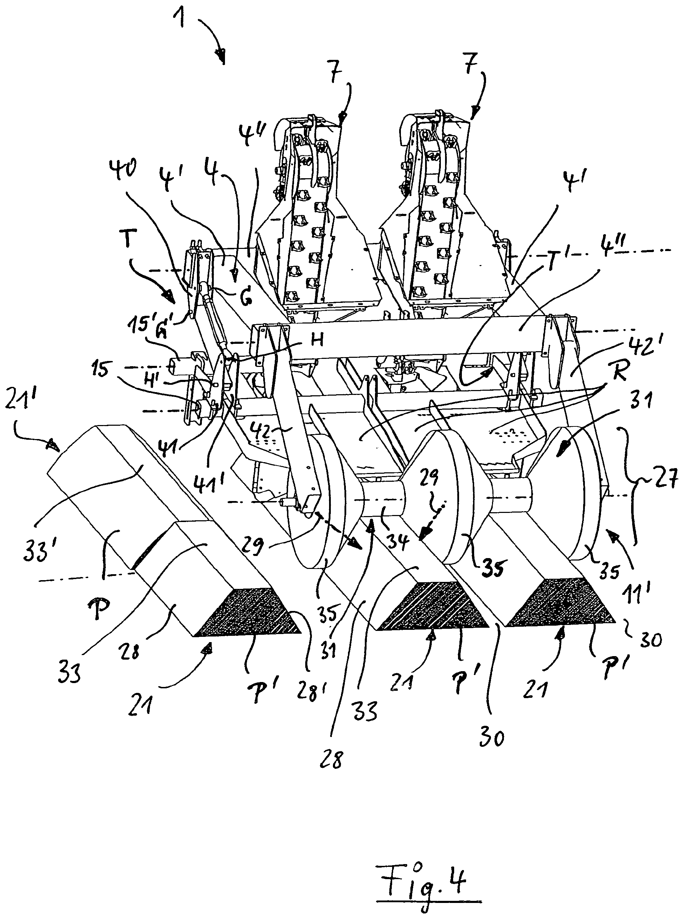

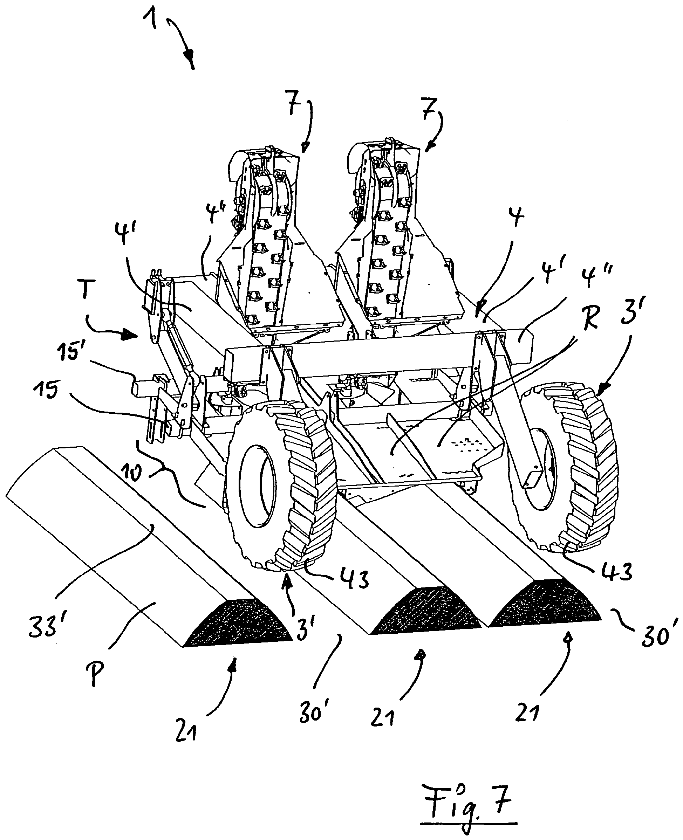

Mittels dieser Abdeckbaugruppe 10 ist eine funktionale Einheit geschaffen, mit der auch bei schwierigem Geländeverlauf der Ackerfläche oder bei wechselnden Bodenbedingungen mit jeweils hoher Zuverlässigkeit ein eine konstante Knollentiefe K (Fig. 12) vorgebender Damm 21 (Fig. 4, Fig. 7) erreicht wird.

In der Seitenansicht gemäß Fig. 2 wird deutlich, dass der Längsbalken 14 des Tragwerkes T einerseits den Furchenzieher 9 sowie das Zudeckelement 11 hält und andererseits eine für die Schwenkbewegung gemäß Pfeil D nutzbare Aufhängung in Form einer Stützbaugruppe 17 vorgesehen ist (nachfolgend wird jeweils nur das Tragwerk T bzw. T''' angesprochen; es versteht sich, dass ein zweites, wie T', entsprechend spiegelbildlich angeordnet ist). Diese Stützbaugruppe 17 ist in zweckmäßiger Ausführung nach Art einer Parallelogramm-Lenkung aufgebaut, wobei jeweilige Anlenkpunkte G, G' und H, H' von stangenförmigen Tragteilen definiert werden.

In bevorzugter Ausführung ist das Lenk-Parallelogramm G, G', H, H' der Stützbaugruppe 17 von einem Lenkhebel 18 und einem längenveränderbaren Stellglied 19, insbesondere in Form einer Stellspindel, gebildet. Ebenso ist denkbar, dass als Stellglied 19 ein Hydraulikzylinder o. dgl. vorgesehen wird. Zur Verbindung dieser Stützbaugruppe 17 mit dem Maschinenrahmen 4 kann zusätzlich ein Schwingungen des Systems ausgleichendes Federelement 20 vorgesehen sein, das beispielsweise in Form eines hydraulischen Dämpfers ausgeführt sein kann. Die Rückansicht gemäß Fig. 4 verdeutlicht, dass ein vorderer Halteflansch 40 (mit den Punkten G, G') an der Querstrebe 4" gehalten ist und hintere Halteplatten 41, 41' (mit den Punkten H, H') nur am Querträger 15 angreifen; damit ist die "Wipp-Bewegung" D des Systems möglich.

In Fig. 3 ist die Legemaschine gemäß Fig. 2 in einer Rückansicht gezeigt, wobei die vom allgemein mit 11' bezeichneten Dammformer verdeckten Einzelteile der Abdeckbaugruppe 10 deutlich werden. Der im wesentlichen keilförmig in den Boden B eingreifende Furchenzieher 9 weist einen im Grund der Furche F gleitend verlagerbaren Kufenteil 22 auf, im in Vorschubrichtung A hinteren Teil des Furchenziehers 9 ist als Verbindung zum Zudeckelement 11 hin ein seitliches Schließblech 25' vorgesehen (Fig. 2) und oberhalb dieser Bauteile ist eine Deckplatte R über der Abdeckbaugruppe 10 vorgesehen (Fig. 4).

Bei dieser Ausführung des Zudeckelementes 11 (Fig. 3) sind spiegelsymmetrisch zur jeweiligen Längsmittelebene M, M' zwei eine Radienkontur bildende Formbleche 23, 23' vorgesehen, die im Bereich einer Halteachse 24 (Fig. 2) schwenkbar mit dem Schließblech 25' zusammenwirken, so dass der Damm 21 jeweilige Dammprofile P mit unterschiedlichen Radienkonturen aufweisen kann (Fig. 4, linke Seite). Die Formbleche 23 sind an ihrem bodenseitigen Ende mit einem im Boden B geführten und leicht auswechselbaren Verschleißteil 25 versehen.

Die Zusammenschau von Fig. 2 bis 4 verdeutlicht, dass die unmittelbar vorlaufend dem Dammformteil 11' angeordnete Abdeckbaugruppe 10 so angeordnet ist, dass mit dem Tragarme 42, 42' aufweisenden Dammformteil 11' zusätzlich zur Profilierung und Verfestigung des Bodens auch eine bodenseitige Abstützung der gesamten Legemaschine 1 (Pfeil N, Fig. 2) erreicht wird.

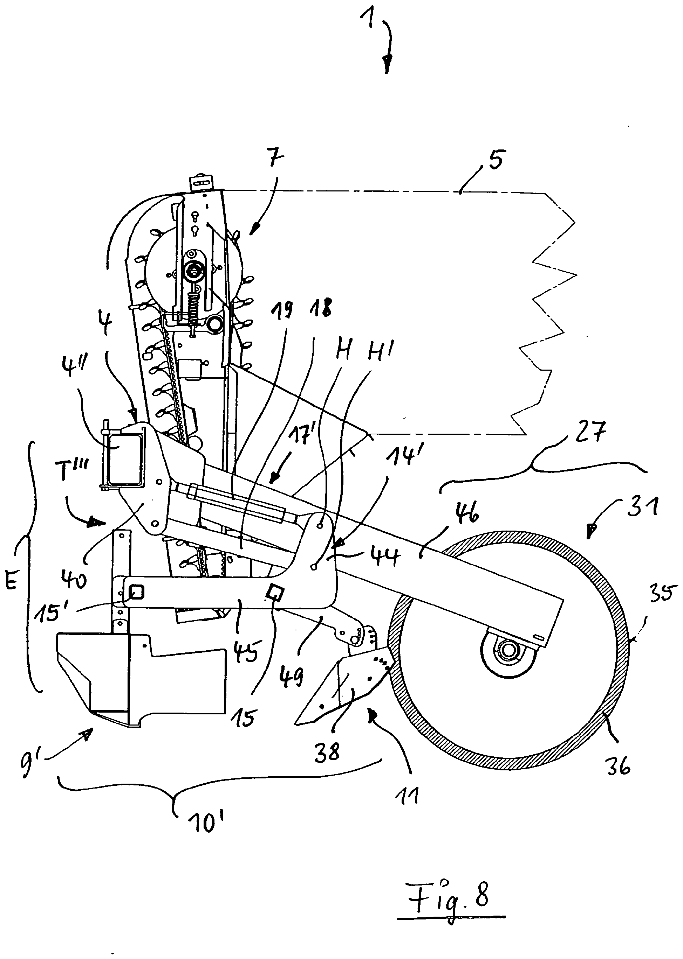

Diese Ausführung der Legemaschine 1 verdeutlicht, dass bei dieser das Dammformteil 11' insgesamt eine den vom Zudeckelement 11 aufgehäufelten Damm 21' (Fig. 4, linke Seite) profilierende Nachformeinheit 27 bildet, die unmittelbar in den Lege- und Abdeckvorgang integriert ist und eine optimale Dammform 21 (Fig. 4) bewirkt. Diese kombinierte Konstruktion der Abdeckbaugruppe 10 mit der Nachformeinheit 27 ist darauf abgestellt, dass eine bereits in Fig. 2 dargestellte Stützfunktion des Systems (an Stelle eines Laufrades 3, Fig. 1) zusätzlich erreicht wird. Diese Wirkung der Bauteile im Bereich der Nachformeinheit 27 ist auch den Ausführungsformen der Maschine 1 gemäß Fig. 8 bis 11 sowie 13 und 14 zu entnehmen.

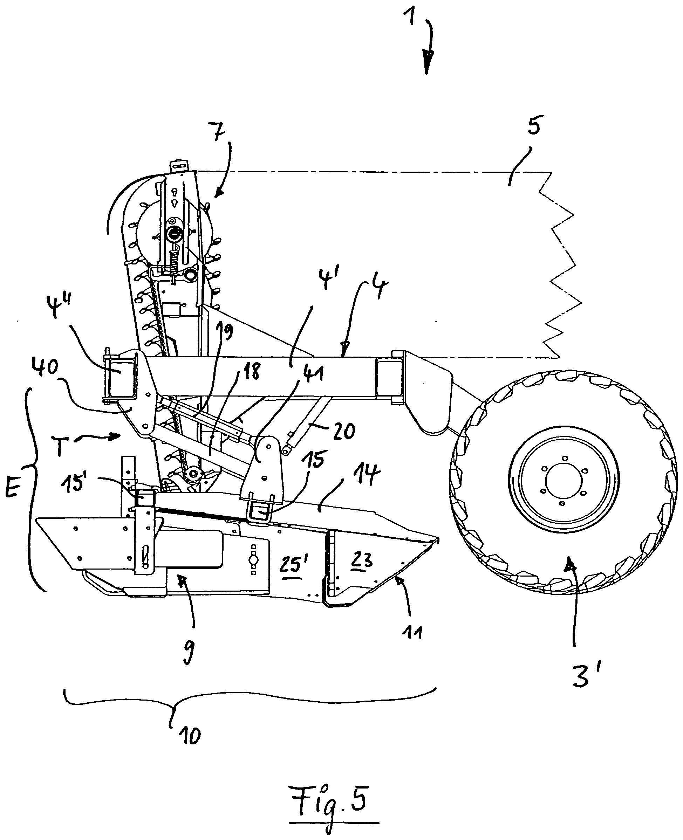

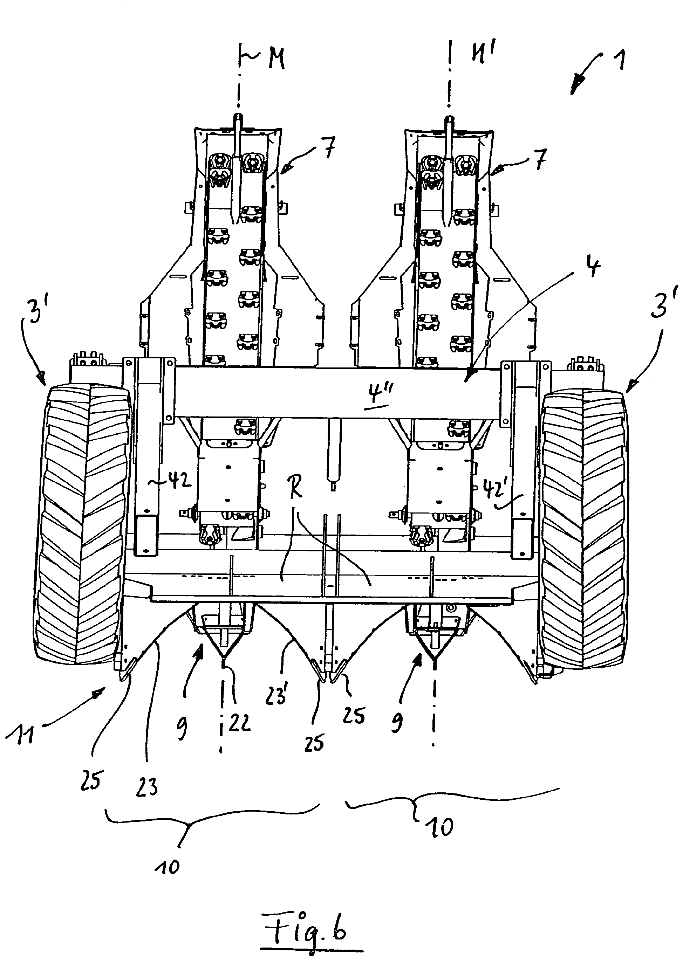

Ebenso ist vorgesehen, dass die Abdeckbaugruppe 10 mit einem in Fig. 5 bis 7 sowie Fig. 12 dargestellten Stützrad 3' zusammenwirken kann, so dass die vorbeschriebene Nachformung P' des Damms 21 ("Trapez"-Form gemäß Fig. 4) jedoch nicht möglich ist. In Fig. 7 ist das Dammprofil P ("ballige" Flanken) bereits am Ende der Abdeckbaugruppe 10 mittels der Zudeckelemente 11 fertiggestellt, wobei nur die entsprechende Einstellung der Formbleche 23, 23' für eine hinreichende Dammpressung sorgt. Für einen optimalen Lauf der Räder 3' im Nahbereich des Damms 21 sind entsprechende Profilierungen 43 der Reifen vorgesehen und diese insbesondere an der Innenseite mit einer Schräge des Profils geformt.

In der ersten Ausführung der Abdeckbaugruppe 10 mit der Nachformeinheit 27 gemäß Fig. 2 bis 4 ist diese in zweckmäßiger Ausführung am Maschinenrahmen 4 abgestützt, so dass durch eine lösbare Verbindung sowohl ein schneller Wechsel der Bauteile als auch eine Anpassung an variierende Bodenverhältnisse bzw. kundenspezifische Konstruktionswünsche möglich sind.

Die Rückansichten gemäß Fig. 4, Fig. 9, Fig. 11 sowie Fig. 14 verdeutlichen, dass mit der Nachformeinheit 27 eine zumindest die Dammflanken 28, 28' des aufgehäufelten Damms 21 stabilisierende Bodenpressung (Pfeil 29, Fig. 4) erreichbar ist. In zweckmäßiger Ausführung ist die Nachformeinheit 27 auf die Größe des Zudeckelementes 11 bzw. dessen Formbleche 23, 23' so abgestimmt, dass die Nachformeinheit 27 gleichzeitig an den Dammflanken 28, 28' und dem Bodenprofil 30 zwischen den benachbarten Dämmen 21 auflegbar ist.

Die vergrößerten Rückansichten gemäß Fig. 3 und 4 bzw. 9 und 11 verdeutlichen, dass die Nachformeinheit 27 mehrere nach Art eines Laufrades neben dem Damm 21 abrollbare Dammformtrommeln 31 aufweist. Diese Dammformtrommeln 31 weisen zwei spiegelsymmetrisch zur Längsmittelebene M, M' des Dammes 21 angeordnete Formkegel 32, 32' auf, die im Bereich der Längsmittelebene M, M' durch einen die Dammkrone 33 formenden Zylinderteil 34 verbunden sind und andererseits ein auf dem Bodenprofil 30 aufliegendes Rollprofil 35 aufweisen.

In Fig. 5 bis 7 ist die Abdeckbaugruppe 10 in ihrem Zusammenwirken mit den jeweiligen Stützrädern 3' dargestellt, wobei die vorbeschriebene Formphase des Dammes 21 ähnlich Fig. 4 nicht vorgesehen ist, da bei dieser Ausführung der Maschine 1 keine Nachformeinheit angelenkt ist. An deren Stelle sind an den Tragarmen 42, 42' die Räder 3' vorgesehen. Der in Fig. 7 dargestellte Damm 21 weist im Bereich P das nur mittels der Formbleche 23, 23' verfestigte Flankenprofil auf und die Oberseite 33 des Dammes 21 wird durch die Unterseite einer Deckplatte R geformt.

In den Darstellungen gemäß Fig. 8 bis 10 sind die Dammformtrommeln 31 im Bereich ihres jeweiligen Rollprofils 35 mit einem zur Abstützung der Maschine 1 beim Straßentransport geeigneten Rollbelagteil 36 versehen, wobei insbesondere eine PUR-Beschichtung o. dgl. dämpfende Auflage vorgesehen sind.

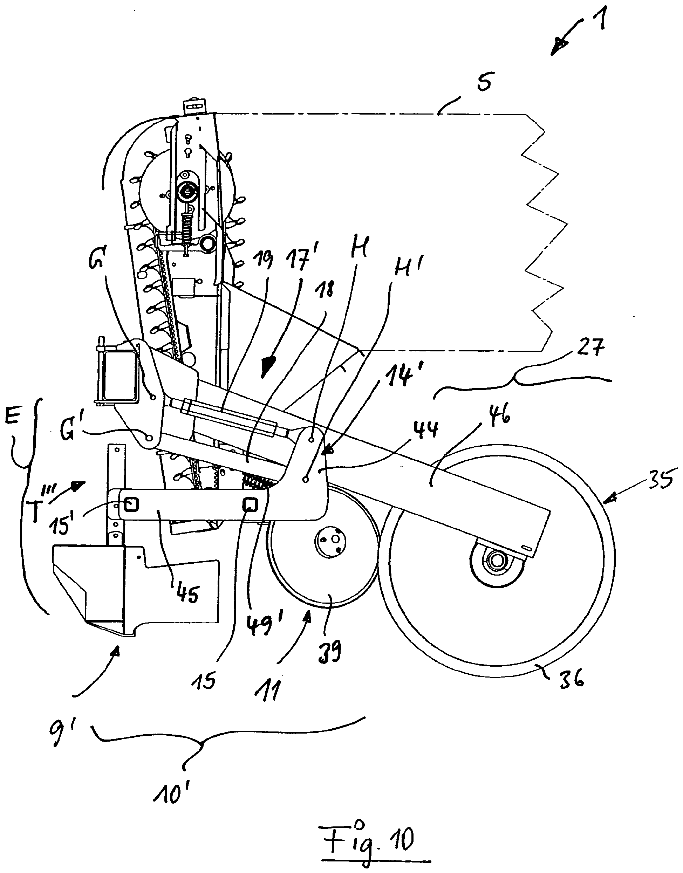

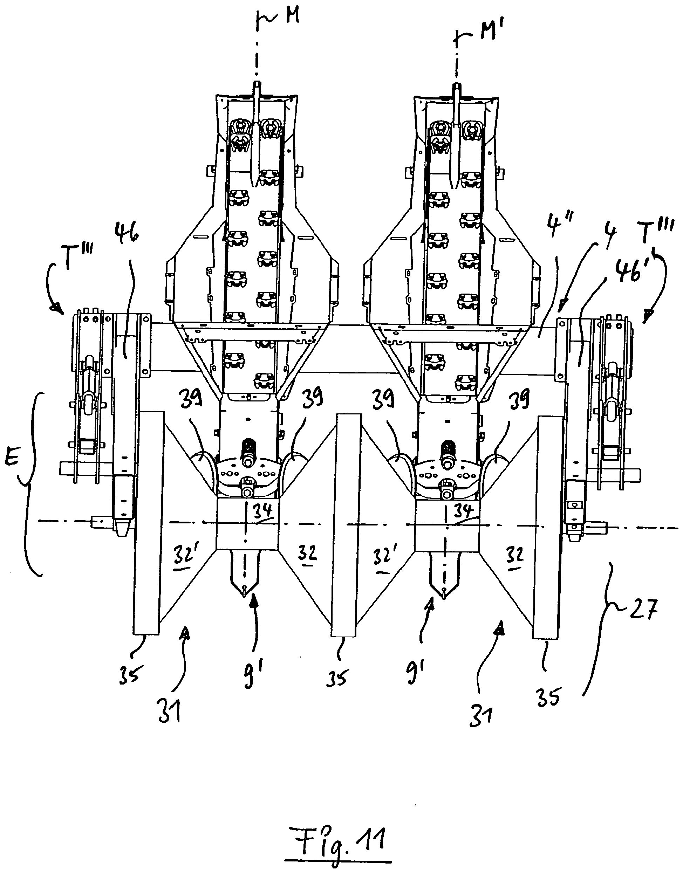

In Fig. 8 und 9 bzw. 10 und 11 sind jeweilige Abdeckbaugruppen 10' in einer zweiten Ausführung dargestellt, wobei diese im Bereich eines L-förmigen Längsbalkens 14' teilweise geänderte Bauteil-Kombinationen als Einheit E tragen. Dem Furchenzieher 9' in Fig. 8 ist ein als Pflugschar 37 ausgebildetes Zudeckelement 11 nachgeordnet und in Fig. 10 und 11 weist die Abdeckbaugruppe 10' bzw. das Tragwerk T'" im wesentlichen die gleiche Konstruktion wie in Fig. 8 auf, jedoch sind hier an Stelle von Pflugscharen paarweise zusammenwirkende Dammformscheiben 39 (Fig. 11) vorgesehen.

Das Tragwerk T''' mit dem L-Längsbalken 14' weist dabei ebenfalls eine Stützbaugruppe 17' mit den Gelenk-Parallel-Punkten G, G', H, H' auf. Die Gelenkpunkte H und H' greifen dabei am kurzen Schenkel 44 des L-Profils 14' an, wobei der lange Schenkel 45 direkt nur vorderseitig den Furchenzieher 9' trägt. Im Bereich des Querträgers 15 ist das Pflugschar 38 (Fig. 8) über einen Verbinder 49 mit dem L-Längsbalken 14' verbunden und zur Halterung der Dammformscheibe 39 ist ein Verbinder 49' für eine indirekte Verbindung vorgesehen (Fig. 10).

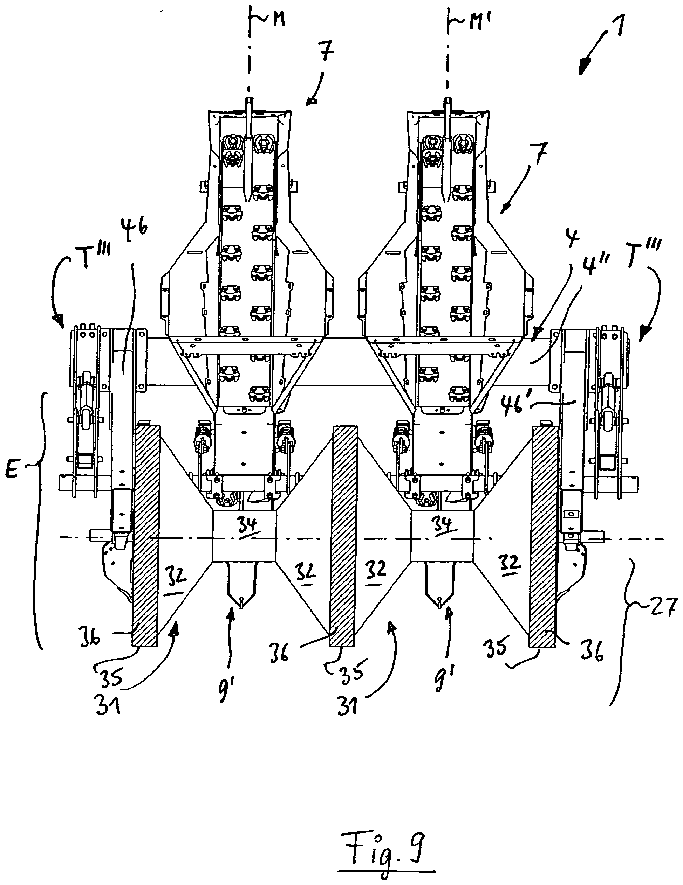

In Fig. 9 und 11 sind jeweilige Rückansichten der Konstruktion gemäß Fig. 8 bzw. 10 dargestellt, wobei ebenfalls eine mehrreihige Ausführung der Maschine 1 deutlich wird und der symmetrische Aufbau im Bereich der Abdeckbaugruppe 10' sowie der Nachformeinheit 27 gezeigt ist.

Die Darstellungen gemäß Fig. 8 bis 11 zeigen auch, dass der im wesentlichen nur noch die vordere Querstrebe 4" aufweisende Rahmen 4 für die direkte Abstützung der Nachformeinheit 27 (oder hier nicht dargestellter Räder 3) jeweilige Streben 46, 46' aufweist, so dass mit geringem Aufwand die bereits zu Fig. 5 bzw. Fig. 7 erörterten Stütz- und Führungsbedingungen (entsprechend den Tragarmen 42, 42') erreicht sind.

Bei der in Fig. 12 dargestellten Maschine 1 mit der gemäß Fig. 2 gezeigten Abdeckbaugruppe 10 ist diese in Kombination mit einer veränderten Ausführung der Vereinzelungsvorrichtung 7' dargestellt. Das Stützrad 3" ist dabei an einem mit der Querstrebe 4" versehenen Gestellteil 47 gehalten, wobei mittels des Zudeckelementes 11 eine direkte Abdeckung der Knollen 6' und die Dammformung erfolgt.

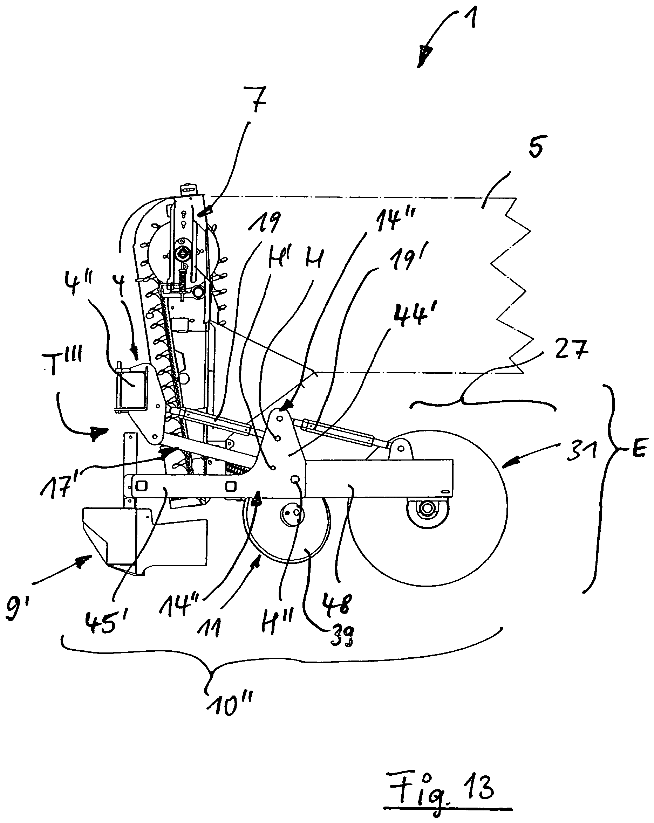

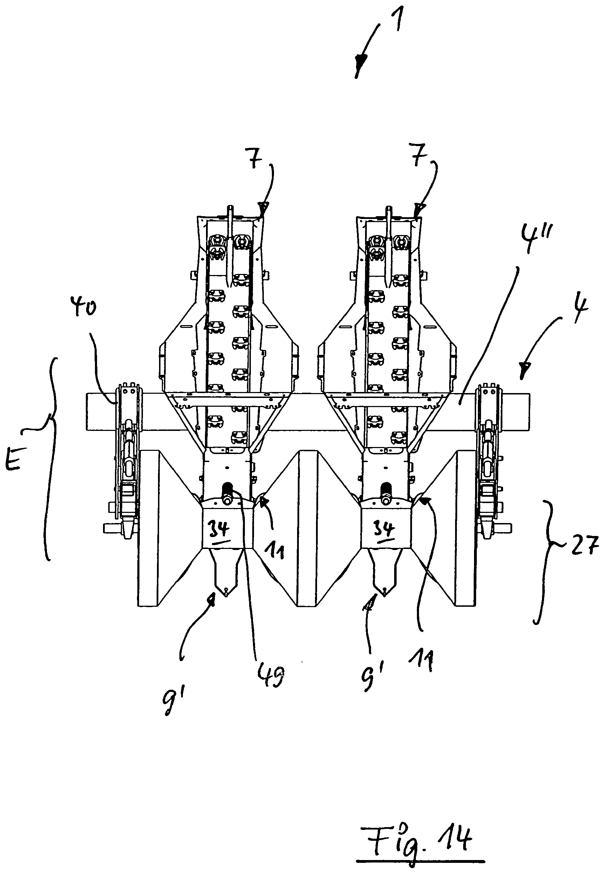

In einer weiteren Ausführung der Maschine 1 gemäß Fig. 13 und 14 ist vorgesehen, dass die Nachformeinheit 27 mit dem Furchenzieher 9' und dem Zudeckelement 11 eine gemeinsam verstellbare dreiteilige Abdeckbaugruppe 10" bildet. Der ähnlich Fig. 8 und Fig. 10 als L-Profilteil vorgesehen Längsbalken 14" ist dabei im Übergangsbereich zwischen Längsschenkel 45' und kurzem Schenkel 44' mit einem Tragansatzteil 48 versehen, an dem endseitig die Nachformeinheit 27 (oder das Rad 3; nicht dargestellt) abstützbar ist. Dabei können die Teile 44', 45' und 48 als starre Einheit ausgeführt sein, die nur mittels des Tragwerkes T'" (ähnlich Fig. 10) verstellbar ist und so die Bedienung der Abdeckbaugruppe 10" entsprechend den vorbeschriebenen Funktionen ermöglicht. Zusätzlich ist in Fig. 13 eine zweite Stellspindel 19' dargestellt, mittels der der einen Gelenkpunkt H" aufweisende Tragansatzteil 48 unabhängig vom vorderen Tragwerk T'" einstellbar sein kann, so dass die Legemaschine 1 an variierende Einsatzbedingungen einfach anpassbar ist.

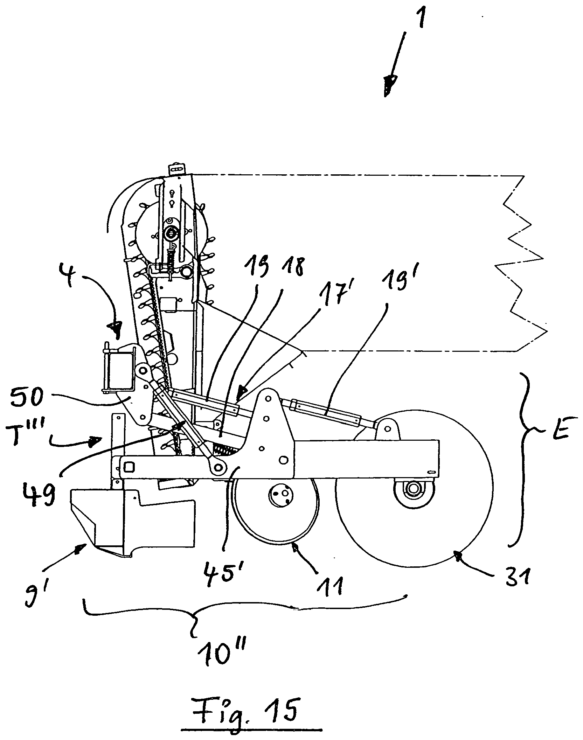

In einer erweiterten Ausführung gemäß Fig. 15 ist das Tragwerk T'''' mit einem zusätzlichen Stabilisierungselement 49 versehen, das sich im wesentlichen parallel zum Lenk-Parallelogramm 17' zwischen einer Halteplatte 50 am Maschinenrahmen 4 und dem Längsschenkel 45' des L-Profils erstreckt. Mit diesem als Spannschlossteil, Zylinderbaugruppe o. dgl. ausführbaren Stabilisator 49 wird die Abdeckbaugruppe 10" so mit dem Maschinenrahmen 4 verbunden, dass durch eine einstellbare und fixierbare Zusatzbaugruppe ein besonders verwindungssteifes System erreicht wird, bei dem das bodenseitig aufliegende Stützelement 31 geradlinig geführt wird oder dieses auch entbehrlich ist bzw. variabel ausgeführt werden kann (nicht dargestellt).

## Patentansprüche

1. Legemaschine für Kartoffeln, mit einem von einem Zugfahrzeug im Bereich einer Anhängevorrichtung (2) erfassbaren und über bodenseitige Laufräder (3) abstützbaren Maschinenrahmen (4), an dem für einen zumindest einreihigen Legevorgang eine einen oberen Vorratsbehälter (5) für Knollen (6) aufweisende Vereinzelungsvorrichtung (7, 7') gehalten ist, wobei unterhalb dieser in Arbeitsrichtung (A) im wesentlichen hintereinander ein im Ackerboden (B) eine Aufnahmefurche (F) für die vereinzelten Knollen (6') erzeugender Furchenzieher (9) und zumindest ein Ackerboden (B') auf eingelegte Knollen (6) häufelndes Zudeckelement (11) vorgesehen sind, wobei zumindest der Furchenzieher (9, 9') und das zumindest eine Zudeckelement (11) als gemeinsam verstellbare Baueinheit (E) durch ein Tragwerk (T, T', T", T''') mit dem Maschinenrahmen (4) verbunden sind, **dadurch gekennzeichnet dass** der Furchenzieher (9) und das zumindest eine Zudeckelement (11) eine einstellbar an einem Längsbalken (14, 14', 14") des Tragwerkes (T, T', T", T''') gehaltene Abdeckbaugruppe (10, 10', 10") bilden, mit dieser Abdeckbaugruppe (10, 10', 10") ein eine konstante Knollentiefe vorgebender Damm (21) formbar ist und in diesem die Knollen (6) einen konstanten Abstand (K) zur Dammoberseite (33) aufweisen, derart, dass mittels jeweiliger als die Zudeckelemente (11) wirkender Formbleche (23, 23') die Flankenprofile (P) des Dammes (21) verfestigt sind und die Oberseite (33) des Dammes (21) durch die Unterseite einer Deckplatte (R) der Abdeckbaugruppe (10, 10', 10") geformt ist.

2. Legemaschine nach Anspruch 1, **dadurch gekennzeichnet, dass** ein einerseits mit dem Furchenzieher (9, 9') und dem Zudeckelement (11) verbundener Längsbalken (14, 14', 14") andererseits zum Maschinenrahmen (4) hin eine eine verstellbare Aufhängung (Winkel D) bildende Stützbaugruppe (17) als das Tragwerk (T) aufweist. dieses Tragwerk (T, T', T", T''') im Bereich der zum Maschinenrahmen (4) gerichteten Stützbaugruppe (17) mit jeweiligen ein Lenk-Parallelogramm (G, G', H, H') bildenden Verbindern versehen ist und das Parallelogramm (G, G', H, H') der Stützbaugruppe (17) von einem Lenkhebel (18) und einem längenveränderbaren Stellglied (19) gebildet ist.

3. Legemaschine nach Anspruch 2, **dadurch gekennzeichnet, dass** als längenveränderbares Stellglied (19) eine Gewinde-Spindel, ein Hydraulikzylinder o. dgl. Antriebsorgan vorgesehen ist.

4. Legemaschine nach einem der Ansprüche 2 bis 3, **dadurch gekennzeichnet,**
**dass** die Stützbaugruppe (17) zusätzlich zu den Parallelogramm-Verbindern zur Verbindung mit dem Maschinenrahmen (4) ein als hydraulischer Dämpfer ausführbares Federelement (20) aufweist, das im Bereich einer hinteren Halteplatte (41) an der Stützbaugruppe (17) angelenkt ist.

5. Legemaschine nach einem der Ansprüche 1 bis 4, **dadurch gekennzeichnet, dass** die Teile der Abdeckbaugruppe (10, 10', 10") gemeinsam höhenverstellbar mit dem Maschinenrahmen (4) verbunden sind.

6. Legemaschine nach einem der Ansprüche 1 bis 5, **dadurch gekennzeichnet, dass** diese bei mehrreihiger Ausführung des Legevorgangs an dem einen Querträger (15) aufweisenden Tragwerk (T, T', T", T''') mehrere der Baueinheiten (E, E') aufweist.

7. Legemaschine nach einem der Ansprüche 1 bis 6, **dadurch gekennzeichnet, dass** das Tragwerk (T, T', T", T''') für den jeweils in Arbeitsrichtung (A) vorlaufenden Furchenzieher (9, 9') und das nachgeordnete Zudeckelement (11) eine mechanische Kopplung nach Art einer Zwangsführung bewirkt.

8. Legemaschine nach einem der Ansprüche 1 bis 7, **dadurch gekennzeichnet, dass** die Abdeckbaugruppe (10, 10', 10") mit einer den vom Zudeckelement (11) aufgehäufelten Damm (21') profilierenden Nachformeinheit (27) zusammenwirkt.

9. Legemaschine nach Anspruch 8, **dadurch gekennzeichnet, dass** die Nachformeinheit (27) gleichzeitig die Stützfunktion eines Laufrades aufweist.

10. Legemaschine nach Anspruch 8 oder 9, **dadurch gekennzeichnet, dass** die Nachformeinheit (27) am Maschinenrahmen (4) abgestützt ist.

11. Legemaschine nach einem der Ansprüche 8 bis 10, **dadurch gekennzeichnet, dass** die Nachformeinheit (27) mit dem Furchenzieher (9) und dem Zudeckelement (11) eine gemeinsam verstellbare dreiteilige Abdeckbaugruppe (10") bildet.

12. Legemaschine nach einem der Ansprüche 8 bis 11, **dadurch gekennzeichnet, dass** mit der Nachformeinheit (27) eine zumindest die Dammflanken (28, 28') und die Oberseite (33) des aufgehäufelten Damms (21) stabilisierende Bodenpressung (29) erreichbar ist.

13. Legemaschine nach einem der Ansprüche 8 bis 12, **dadurch gekennzeichnet, dass** die Nachformeinheit (27) gleichzeitig an dem Dammprofil (28, 28', 33) und dem Bodenprofil (30) zwischen benachbarten Dämmen (21) auflegbar ist.

14. Legemaschine nach einem der Ansprüche 8 bis 13, **dadurch gekennzeichnet, dass** die Nachformeinheit (27) jeweilige nach Art eines Laufrades neben dem Damm (21) abrollbare Dammformtrommeln (31) aufweist.

15. Legemaschine nach Anspruch 14, **dadurch gekennzeichnet, dass** die Dammformtrommel (31) zwei spiegelsymmetrisch zur Längsmittelebene (M) des Dammes (21) angeordnete Formkegel (32, 32') aufweist, die einerseits im Bereich der Längsmittelebene (M, M') durch einen die Dammkrone (33) formenden Zylinderteil (34) verbunden sind und andererseits ein auf dem Bodenprofil (30) auflegbares Rollprofil (35) aufweisen.

16. Legemaschine nach Anspruch 14 oder 15, **dadurch gekennzeichnet, dass** die Dammformtrommel (31) mit einem zur Abstützung der Maschine (1) beim Straßentransport geeigneten Rollbelagteil (36) versehen ist.

17. Legemaschine nach Anspruch 16, **dadurch gekennzeichnet, dass** die Dammformtrommel (31) im Bereich des Rollprofils (35) mit einer PUR-Beschichtung versehen ist.

## Claims

1. Machine for planting potatoes, comprising a machine frame (4) which can be gripped by a towing vehicle (2) in the region of a towbar, can be supported by ground-side running wheels (3) and on which a separation device (7, 7') is retained which comprises an upper storage container (5) for tubers (6) for an at least single-furrow planting process, a furrow opener (9) that creates a receiving furrow (F) for the separated tubers (6') in the arable soil (B) and at least one covering element (11) that heaps arable soil (B') onto planted tubers (6) being provided substantially in succession below said separation device in the working direction (A), at least the furrow opener (9, 9') and the at least one covering element (11) being connected to the machine frame (4) by a supporting structure (T, T', T", T''') as a jointly adjustable structural unit (E), **characterised in that** the furrow opener (9) and the at least one covering element (11) form a covering assembly (10, 10', 10") adjustably retained on a longitudinal bar (14, 14', 14") of the supporting structure (T, T', T", T'''), by means of which covering assembly (10, 10', 10") a ridge (21) predetermining a constant tuber depth can be shaped, in which ridge the tubers (6) are at a constant distance (K) from the top (33) of the ridge, such that, by means of respective shaping boards (23, 23') acting as the covering elements (11), the side profiles (P) of the ridge (21) are strengthened and the top (33) of the ridge (21) is shaped by the underside of a covering plate (R) of the covering assembly (10, 10', 10").

2. Planting machine according to claim 1, **characterised in that** a longitudinal bar (14, 14', 14") connected at one end to the furrow opener (9, 9') and the covering element (11), and facing towards the machine frame (4) at the other end, comprises a support assembly (17), which forms an adjustable suspension (bracket D), as the supporting structure (T), said supporting structure (T, T', T", T''') is provided with respective connectors forming a steering parallelogram (G, G', H, H') in the region of the support assembly (17) directed towards the machine frame (4), and the parallelogram (G, G', H, H') of the support assembly (17) is formed by a steering arm (18) and a length-adjustable actuator (19).

3. Planting machine according to claim 2, **characterised in that** a threaded spindle, a hydraulic cylinder or similar drive member is provided as the length-adjustable actuator (19).

4. Planting machine according to any of claims 2 to 3, **characterised in that** the support assembly (17) comprises, in addition to the parallelogram connectors for connection to the machine frame (4), a spring element (20) which can be designed as a hydraulic damper and is articulated to the support assembly (17) in the region of a rear retaining plate (41).

5. Planting machine according to any of claims 1 to 4, **characterised in that** the parts of the covering assembly (10, 10', 10") are connected to the machine frame (4) so as to be jointly height-adjustable.

6. Planting machine according to any of claims 1 to 5, **characterised in that**, in a multiple-furrow planting process, said planting machine comprises a plurality of structural units (E, E') on the supporting structure (T, T', T", T'''), which comprises a transverse support (15).

7. Planting machine according to any of claims 1 to 6, **characterised in that** the supporting structure (T, T', T", T''') for the furrow opener (9, 9') advancing in the working direction (A) and the covering element (11) arranged therebehind brings about mechanical coupling in the manner of forced guidance.

8. Planting machine according to any of claims 1 to 7, **characterised in that** the covering assembly (10, 10', 10") interacts with a reshaping unit (27) that shapes the ridge (21') heaped up by the covering element (11).

9. Planting machine according to claim 8, **characterised in that** the reshaping unit (27) simultaneously has the function of supporting a running wheel.

10. Planting machine according to either claim 8 or claim 9, **characterised in that** the reshaping unit (27) is supported on the machine frame (4).

11. Planting machine according to any of claims 8 to 10, **characterised in that** the reshaping unit (27) forms a jointly adjustable, three-part covering assembly (10") together with the furrow opener (9) and the covering element (11).

12. Planting machine according to any of claims 8 to 11, **characterised in that**, by means of the reshaping unit (27), soil pressure (29) that stabilises at least the ridge sides (28, 28') and the top (33) of the heaped-up ridge (21) can be achieved.

13. Planting machine according to any of claims 8 to 12, **characterised in that** the reshaping unit (27) can be simultaneously applied to the ridge profile (28, 28', 33) and to the ground profile (30) between adjacent ridges (21).

14. Planting machine according to any of claims 8 to 13, **characterised in that** the reshaping unit (27) comprises respective ridge-shaping drums (31) that can roll beside the ridge (21) in the manner of a running wheel.

15. Planting machine according to claim 14, **characterised in that** the ridge-shaping drum (31) comprises two shaping cones (32, 32') that are arranged in mirror symmetry to the central longitudinal plane (M) of the ridge (21), are connected at one end, in the region of the central longitudinal plane (M, M'), by a cylinder part (34) forming the ridge crest (33) and, at the other end, comprise a roller profile (35) that can be applied to the ground profile (30).

16. Planting machine according to either claim 14 or claim 15, **characterised in that** the ridge-shaping drum (31) is provided with a roller coating part (36) suitable for supporting the machine (1) when it is being transported on roads.

17. Planting machine according to claim 16, **characterised in that** the ridge-shaping drum (31) is provided with a PUR coating in the region of the roller profile (35).

## Revendications

1. Planteuse de pommes de terre comprenant un cadre (4) qu'un tracteur peut prendre au niveau d'un dispositif d'attelage (2), qui peut être supporté par des roues de roulement côté sol (3) et auquel un dispositif de séparation (7, 7'), muni d'un réservoir supérieur (5) destiné à des tubercules (6), est supporté en vue d'une opération de plantation d'au moins une rangée, une sillonneuse (9) qui crée dans la terre (B) du champ un sillon de réception (F) destiné aux tubercules séparés (6') et au moins un élément de recouvrement (11) qui butte la terre (B') du champ sur les tubercules plantés (6) étant prévus sensiblement l'un derrière l'autre dans la direction de travail (A) au-dessous de ce dispositif de séparation, au moins la sillonneuse (9, 9') et l'au moins un élément de recouvrement (11) étant reliés au cadre (4) par le biais d'une structure de support (T, T', T", T''') pour former une unité structurelle (E) réglable conjointement, **caractérisée en ce que** au moins la sillonneuse (9) et l'au moins un élément de recouvrement (11) forment un ensemble de recouvrement (10, 10', 10") supporté de manière réglable par une poutre longitudinale (14, 14', 14") de la structure de support (T, T', T", T'''), **en ce qu'**un remblai (21) prescrivant une profondeur de tubercule constante peut être formé avec cet ensemble de recouvrement (10, 10', 10") et, dans ce remblai, les tubercules sont disposés à une distance constante (K) par rapport au côté supérieur (33) du remblai de sorte que les profils de flanc du remblai (21) sont consolidés avec des plaques de formage (23, 23') respectives agissant comme les éléments de recouvrement (11) et le côté supérieur (33) du remblai (21) est formé par le côté inférieur d'un plaque de recouvrement de l'ensemble de recouvrement.

2. Planteuse selon la revendication 1, **caractérisée en ce qu'**une poutre longitudinale (14, 14', 14"), reliée d'un côté à la sillonneuse (9, 9') et à l'élément de recouvrement (11), comporte d'un autre côté, en direction du cadre (4), un ensemble de support (17) formant une suspension réglable (angle D) et servant de structure de support (T), cette structure de support (T, T', T", T''') étant munie, au niveau de l'ensemble de support (17) orienté en direction du châssis (4), d'éléments de raccordement respectifs formant un parallélogramme orientable (G, G', H, H') et le parallélogramme orientable (G, G', H, H') de l'ensemble de support (17) étant formé par un levier orientable (18) et un élément de commande (19) réglable en longueur.

3. Planteuse selon la revendication 2, **caractérisée en ce qu'**il est prévu comme élément de commande (19) réglable en longueur une broche filetée, un vérin hydraulique ou un élément d'entraînement analogue.

4. Planteuse selon l'une des revendications 2 à 3, **caractérisée en ce que** l'ensemble de support (17) comporte, en plus des éléments de raccordement du parallélogramme destinés au raccordement au cadre (4), comprenant un élément à ressort (20), réalisable sous forme d'un amortisseur hydraulique, qui, est raccordé de manière articulée à l'ensemble de support (17) au niveau d'une plaque de support arrière (41).

5. Planteuse selon l'une des revendications 1 à 4, **caractérisée en ce que** les parties de l'ensemble de recouvrement (10, 10', 10") sont reliées a cadre (4) de manière réglable en hauteur conjointement.

6. Planteuse selon l'une des revendications 1 à 5, **caractérisée en ce qu'**elle comporte une pluralité d'unités structurelles (E, E1) au niveau de la structure de support (T, T', T", T''') lorsque le processus de plantation est réalisé sur plusieurs rangées.

7. Planteuse selon l'une des revendications 1 à 6, **caractérisée en ce que** la structure de support (T, T', T", T''') destinée à la sillonneuse (9, 9') placé devant dans la direction de travail (A) et l'élément de recouvrement (11), placé derrière, réalise un accouplement mécanique à la manière d'un guidage forcé.

8. Planteuse selon l'une des revendications 1 à 7, **caractérisée en ce que** l'ensemble de recouvrement (10, 10', 10") coopère avec une unité de reformage (27) profilant le remblai (21') butté par l'élément de recouvrement (11).

9. Planteuse selon la revendication 8, **caractérisée en ce que** l'unité de reformage (27) remplit en même temps la fonction de support d'une roue de roulement.

10. Planteuse selon la revendication 8 ou 9, **caractérisée en ce que** l'unité de reformage (27) est supportée par le cadre (4) .

11. Planteuse selon l'une des revendications 8 à 10, **caractérisée en ce que** l'unité de reformage (27) forme avec la sillonneuse (9) et l'élément de recouvrement (11) un ensemble de recouvrement en trois parties (10") réglables conjointement.

12. Planteuse selon l'une des revendications 8 à 11, **caractérisée en ce que** l'unité de reformage (27) permet d'obtenir un dispositif de compression de terre (29) stabilisant au moins les flancs (28, 28") du remblai et le côté supérieur (33) du remblai butté (21).

13. Planteuse selon l'une des revendications 8 à 12, **caractérisée en ce que** l'unité de reformage (27) peut être placée en même temps sur le profil de remblai (28, 28', 33) et sur le profil de terre (30) entre des remblais adjacents (21) .

14. Planteuse selon l'une des revendications 8 à 13, **caractérisée en ce que** l'unité de reformage (27) comporte des tambours de formage de remblai (31) pouvant rouler à la manière d'une roue à côté du remblai (21).

15. Planteuse selon la revendication 14, **caractérisée en ce que** le tambour de formage de remblai (31) comporte deux cônes de formage (32, 32') qui sont disposés en symétrie de miroir par rapport au plan médian longitudinal (M) du remblai (21) et qui d'une part sont reliés au niveau du plan médian longitudinal (M, M') par une partie cylindrique (34) formant le sommet de remblai (33) et d'autre part comportent un profil de roulement (35) pouvant être placé sur le profil de terre.

16. Planteuse selon la revendication 14 ou 15, **caractérisée en ce que** le tambour de formage de remblai (31) est pourvu d'un élément de garniture de roulement (36) approprié pour supporter la planteuse lors du transport sur route.

17. Planteuse selon la revendication 16, **caractérisée en ce que** le tambour de formage de remblai (31) est pourvu d'un revêtement en PUR dans la zone du profil de roulement (35).
